(19) **Europäisches Patentamt / European Patent Office / Office européen des brevets**

(11) **EP 4 773 283 A1**

(12) **EUROPEAN PATENT APPLICATION**
published in accordance with Art. 153(4) EPC

(43) Date of publication:
08.07.2026 Bulletin 2026/28

(21) Application number: 25858676.7

(22) Date of filing: 30.06.2025

(51) International Patent Classification (IPC):
$H01M\ 10/0525^{(2010.01)}$     $H01M\ 10/0585^{(2010.01)}$
$H01M\ 4/131^{(2010.01)}$

(52) Cooperative Patent Classification (CPC):
Y02E 60/10; Y02P 70/50

(86) International application number:
PCT/CN2025/105719

(87) International publication number:
WO 2026/045631 (05.03.2026 Gazette 2026/10)

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
GE KH LA MA MD TN

(30) Priority: 31.08.2024 CN 202411216709

(71) Applicant: Ningde Amperex Technology Limited
Ningde City, Fujian Province 352100 (CN)

(72) Inventors:
• SONG, Kexin
  Ningde City, Fujian Province 352100 (CN)
• LIU, Sheng
  Ningde City, Fujian Province 352100 (CN)
• LAO, Shaojiang
  Ningde City, Fujian Province 352100 (CN)
• HUANG, Shaojun
  Ningde City, Fujian Province 352100 (CN)

(74) Representative: Kraus & Lederer PartGmbB
Thomas-Wimmer-Ring 15
80539 München (DE)

(54) **SECONDARY BATTERY AND ELECTRONIC DEVICE**

(57)     This application provides a secondary battery and an electronic device. The secondary battery includes an electrode assembly. The electrode assembly includes first electrode plates, second electrode plates, and separators. The first electrode plates include two outer first electrode plates and an inner first electrode plate. The two outer first electrode plates are located on two outermost sides of the electrode assembly respectively. The first electrode plate includes a first current collector and a first active material layer. The first current collector includes a first surface and a second surface. At least one of the outer first electrode plates is a single-side-coated first electrode plate. The first active material layer applied to the second surface of the single-side-coated first electrode plate is a first material layer. Both the first surface and the second surface of the inner first electrode plate are coated with the first active material layer. The first active material layer applied to the first surface and the second surface of the inner first electrode plate is a second material layer. A conductivity of the single-side-coated first electrode plate is a S/cm, and a conductivity of the inner first electrode plate is b S/cm, satisfying $a \leq b$. This configuration reduces the risk of black spots and lithium plating on the outer electrode plates of the electrode assembly.

FIG. 1

**EP 4 773 283 A1**

**Description**

This application claims priority to Chinese Patent Application No. 202411216709.5, filed with China National Intellectual Property Administration on August 31, 2024 and entitled "SECONDARY BATTERY AND ELECTRONIC DEVICE", which is incorporated herein by reference in its entirety.

**TECHNICAL FIELD**

This application relates to the field of electrochemical technology, and in particular, to a secondary battery and an electronic device.

**BACKGROUND**

Secondary batteries such as a lithium-ion battery are widely used in the field of consumer electronics by virtue of characteristics such as a high specific energy, a high working voltage, a low self-discharge rate, a small size, and a light weight.
Currently, an electrode assembly in the lithium-ion battery typically employs a multi-tab configuration and a stacked structure to reduce impedance of the battery. To ensure the properties such as ultrathinness and a high energy density of the lithium-ion battery, the outermost electrode plate of the electrode assembly is typically single-side-coated. However, due to the manufacturing process and structural particularity of single-side-coated electrode plates, black spots or lithium plating are prone to occur during cycling, resulting in a decline in the performance of the lithium-ion battery.

**SUMMARY**

An objective of this application is to provide a secondary battery and an electronic device to reduce the risk of black spots and lithium plating on the outer electrode plates of the electrode assembly and improve the cycle performance of the secondary battery.
It is noted that in the description hereof, this application is construed by using a lithium-ion battery as an example of the secondary battery, but the secondary battery of this application is not limited to the lithium-ion battery.
In existing technologies, to reduce manufacturing cost and increase the energy density of the secondary battery, an outermost electrode plate of a multi-tab stacked-type electrode assembly in a lithium-ion battery is typically a single-side-coated electrode plate. In other words, a material layer is applied to only one side of a current collector of the electrode plate. The inner electrode plate is typically a double-side-coated electrode plate. The mixing ratio of various substances in the material layer is typically the same between the inner electrode plate and the outer electrode plate. Consequently, the current density on the outer side of the electrode assembly is significantly higher than the current density on the inner side. During cycling of the secondary battery, the electrolyte solution is consumed faster on the outer side of the electrode assembly, and black spots or lithium plating are prone to occur on the single-side-coated outer electrode plate, thereby resulting in a decline in the cycle performance and safety performance of the secondary battery. In view of this situation, this application provides a secondary battery to reduce the risk of black spots and lithium plating on the outer electrode plates of the electrode assembly and improve the cycle performance of the secondary battery. Specific technical solutions are as follows:
A first aspect of this application provides a secondary battery. The secondary battery includes a housing and a stacked-type electrode assembly. Along a thickness direction of the electrode assembly, the electrode assembly includes first electrode plates, second electrode plates, and separators that are stacked up, with a separator being disposed between a first electrode plate and a second electrode plate. The electrode assembly further includes a first tab assembly and a second tab assembly. The first tab assembly includes a plurality of first tabs. The second tab assembly includes a plurality of second tabs. The plurality of first tabs correspond one-to-one to the first electrode plates. The plurality of second tabs correspond one-to-one to the second electrode plates. The first electrode plates include two outer first electrode plates and at least one inner first electrode plate. Along the thickness direction of the electrode assembly, the two outer first electrode plates are located on two outermost sides of the electrode assembly respectively. The inner first electrode plate is located between the two outer first electrode plates. The first electrode plate includes a first current collector and a first active material layer. The first current collector includes a first surface and a second surface disposed opposite to each other along the thickness direction of the electrode assembly. The first surface is closer to the housing than the second surface. At least one of the outer first electrode plates is a single-side-coated first electrode plate. The first surface of the single-side-coated first electrode plate is not coated with the first active material layer. The second surface of the single-side-coated first electrode plate is coated with the first active material layer. The first active material layer applied to the second surface of the single-side-coated first electrode plate is a first material layer. Both the first surface and the second surface of the inner first electrode plate are coated with the first active material layer. The first active material layer applied

2

to the first surface and the second surface of the inner first electrode plate is a second material layer. A conductivity of the single-side-coated first electrode plate is a S/cm, and a conductivity of the inner first electrode plate is b S/cm, satisfying a $\leq$ b. By disposing different first active material layers on the single-side-coated outer first electrode plate and the inner first electrode plate of the electrode assembly and making the conductivity of the single-side-coated outer first electrode plate less than or equal to that of the inner first electrode plate, this application reduces the current density of the outer electrode plate of the electrode assembly, slows down the electrolyte consumption speed during cycling, reduces the risk of black spots and lithium plating on the outer electrode plate of the electrode assembly during cycling, and improves the cycle performance of the secondary battery.

In an embodiment of this application, $0.3 \leq a/b \leq 1$. In an embodiment of this application, $0.65 \leq a/b \leq 1$. By controlling the value of a/b to fall within the above range, this application reduces the risk of black spots and lithium plating on the outer electrode plate of the electrode assembly during cycling, thereby improving the cycle performance of the secondary battery.

In an embodiment of this application, the first electrode plate is a positive electrode plate, thereby more significantly reducing the risk of black spots and lithium plating on the outer electrode plate of the electrode assembly during cycling, and further improving the cycle performance of the secondary battery.

In an embodiment of this application, the first material layer includes a first binder. A mass percent of the first binder is c based on a mass of the first material layer. The second material layer includes a second binder. A mass percent of the second binder is d based on a mass of the second material layer, satisfying $0.6 \leq c/d \leq 4$. By controlling the value of c/d to fall within the above range, this application increases the impedance of the outer electrode plate of the electrode assembly in contrast to the outer electrode plate of a conventional electrode assembly, thereby slowing down the electrolyte consumption speed on the outer side of the electrode assembly during cycling. This reduces the risk of black spots and lithium plating on the outer electrode plate of the electrode assembly during cycling, thereby improving the cycle performance of the secondary battery.

In an embodiment of this application, $2\% \leq c \leq 5\%$, and the first binder and the second binder each are at least one independently selected from polyvinylidene difluoride, polyvinylidene chloride, polyvinylidene dichloride, aramid, polyamide, polyacrylonitrile, an acrylate polymer, styrene-butadiene rubber, a polyacrylate salt, sodium carboxymethyl cellulose, polyvinylpyrrolidone, polyvinyl ether, pure acrylic emulsion, or polyacrylic acid. By using the first binder and the second binder falling within the above type ranges and controlling the mass percent of the first binder to fall within the above range, this application reduces the risk of black spots and lithium plating on the outer electrode plate of the electrode assembly during cycling, thereby improving the cycle performance of the secondary battery.

In an embodiment of this application, the first material layer includes a first conductive agent. The second material layer includes a second conductive agent. The first conductive agent and the second conductive agent each are at least one independently selected from conductive carbon black, carbon nanotubes, graphene, or conductive graphite. Based on a mass of the first material layer, a mass percent of the first conductive agent is 0.5% to 5%. Based on a mass of the second material layer, a mass percent of the second conductive agent is 1% to 10%. By using the first conductive agent and the second conductive agent falling within the above type ranges and controlling the mass percent of the first conductive agent and the mass percent of the second conductive agent to fall within the above ranges, this application reduces the risk of black spots and lithium plating on the outer electrode plate of the electrode assembly during cycling, thereby improving the cycle performance of the secondary battery.

In an embodiment of this application, the first material layer includes a first active material. The second material layer includes a second active material. The first active material and the second active material each are at least one independently selected from lithium cobalt oxide, lithium iron phosphate, lithium nickel oxide, lithium manganese oxide, a nickel cobalt manganese ternary material, or a lithium-rich manganese-based material. Based on a mass of the first material layer, a mass percent of the first active material is 90% to 97.5%. Based on a mass of the second material layer, a mass percent of the second active material is 87% to 98.5%. By using the first active material and the second active material falling within the above type ranges and controlling the mass percent of the first active material and the mass percent of the second active material to fall within the above ranges, this application reduces the risk of black spots and lithium plating on the outer electrode plate of the electrode assembly during cycling, thereby improving the cycle performance of the secondary battery.

In an embodiment of this application, $0.01 \leq b \leq 0.8$. By controlling the conductivity of the inner first electrode plate to fall within the above range, this application achieves a relatively high current density of the inner electrode plate of the electrode assembly during cycling, thereby improving the cycle performance of the secondary battery.

In an embodiment of this application, a thickness of the first current collector of the single-side-coated first electrode plate is $T_1$ μm, and a thickness of the first current collector of the inner first electrode plate is $T_2$ μm, satisfying $T_1 \geq T_2$. In an embodiment of this application, the first electrode plate is a positive electrode plate, $12 \leq T_1 \leq 25$, and $6 \leq T_2 \leq 16$. In an embodiment of this application, the first electrode plate is a negative electrode plate, $14 \leq T_1 \leq 25$, and $4 \leq T_2 \leq 16$. This configuration helps alleviate the problem of warping caused by uneven stress on the first current collector of the single-side-coated first electrode plate due to the material layer applied to only one surface of the current collector. By disposing two material layers on the single-side-coated outer first electrode plate of the electrode assembly and causing the conductivity of the single-side-coated first electrode plate to be less than or equal to the conductivity of the inner first electrode plate, this application more effectively reduces the risk of black spots and lithium plating on the outer electrode plate of the electrode assembly during cycling, and achieves good cycle performance of the secondary battery.

In an embodiment of this application, the housing is an aluminum laminated film. Using the aluminum-plastic film as the housing helps reduce the risk of short-circuiting of the secondary battery and improves the cycle performance and safety performance of the secondary battery.

In an embodiment of this application, the secondary battery further includes an electrolyte solution. The electrolyte solution includes a lithium salt. The lithium salt includes at least one of lithium tetrafluorophosphate, lithium tetrafluoroborate, lithium hexafluorophosphate, lithium bis(oxalato)borate, lithium bis(fluorosulfonyl)imide, or lithium difluorophosphate. A concentration of the lithium salt is 1 mol/L to 5 mol/L. By using the lithium salt falling within the above type range and controlling the concentration of the lithium salt to fall within the above range, this application reduces the risk of black spots and lithium plating on the outer electrode plate of the electrode assembly during cycling, and endows the secondary battery with both a relatively high energy density and good cycle performance.

In an embodiment of this application, the first electrode plate is a negative electrode plate, $0.5 \leq a/b \leq 1$, and $0.1 \leq b \leq 10$. When the first electrode plate is a negative electrode plate, different first active material layers are disposed on the single-side-coated outer first electrode plate and the inner first electrode plate of the electrode assembly, and the values of a/b and b are controlled to fall within the above ranges, this application reduces the risk of black spots and lithium plating on the outer electrode plate of the electrode assembly during cycling, thereby improving the cycle performance of the secondary battery.

In an embodiment of this application, the housing is a steel shell. Using the steel shell as the housing helps reduce the risk of short-circuiting of the secondary battery, increases hardness of the secondary battery, and improves the cycle performance and safety performance of the secondary battery.

A second aspect of this application provides an electronic device. The electronic device includes the secondary battery disclosed in any one of the preceding embodiments. The secondary battery of this application exhibits good cycle performance. Therefore, the electronic device of this application possesses a relatively long lifespan.

Beneficial effects of some embodiments of this application are as follows:

This application provides a secondary battery and an electronic device. By controlling the conductivity of the single-side-coated outer first electrode plate to be less than or equal to that of the inner first electrode plate, this application reduces the current density of the outermost electrode plate of the electrode assembly, slows down the electrolyte consumption speed during cycling, effectively reduces the risk of black spots and lithium plating on the outer electrode plate of the electrode assembly during cycling, and improves the cycle performance of the secondary battery.

Definitely, a single product or method in which the technical solution of this application is implemented does not necessarily achieve all of the above advantages concurrently.

## BRIEF DESCRIPTION OF DRAWINGS

To describe the technical solutions in some embodiments of this application or the prior art more clearly, the following outlines the drawings to be used in the description of some embodiments of this application or the prior art. Evidently, the drawings outlined below merely illustrate some embodiments of this application, and a person of ordinary skill in the art may derive other embodiments from the drawings.

FIG. 1 is a cross-sectional schematic structural diagram of a secondary battery viewed along a length direction of the battery according to an embodiment of this application; and

FIG. 2 is another cross-sectional schematic structural diagram of the secondary battery shown in FIG. 1 viewed along a length direction of the battery.

List of reference signs: secondary battery 001; electrode assembly 01; housing 02; first electrode plate 10; outer first electrode plate 101; inner first electrode plate 102; first current collector 11; first active material layer 12; first material layer 121; second material layer 122; second electrode plate 20; second current collector 21; second active material layer 22; first tab assembly 13; first tab 131; second tab assembly 23; second tab 231; separator 30.

## DETAILED DESCRIPTION

The following describes the technical solutions in some embodiments of this application clearly and comprehensively with reference to the drawings appended hereto. Evidently, the described embodiments are merely a part of but not all of the embodiments of this application. All other embodiments derived by a person skilled in the art based on this application still fall within the protection scope of this application.

It is noted that in specific embodiments of this application, this application is construed by using a lithium-ion battery as an example of the secondary battery, but the secondary battery of this application is not limited to the lithium-ion battery. Specific technical solutions are as follows:

A first aspect of this application provides a secondary battery. The secondary battery includes a housing and a stacked-type electrode assembly. Along a thickness direction of the electrode assembly, the electrode assembly includes first electrode plates, second electrode plates, and separators that are stacked up, with a separator being disposed between a first electrode plate and a second electrode plate. The electrode assembly further includes a first tab assembly and a second tab assembly. The first tab assembly includes a plurality of first tabs. The second tab assembly includes a plurality of second tabs. The plurality of first tabs correspond one-to-one to the first electrode plates. The plurality of second tabs correspond one-to-one to the second electrode plates. The first electrode plates include two outer first electrode plates and at least one inner first electrode plate. Along the thickness direction of the electrode assembly, the two outer first electrode plates are located on two outermost sides of the electrode assembly respectively. The inner first electrode plate is located between the two outer first electrode plates. The first electrode plate includes a first current collector and a first active material layer. The first current collector includes a first surface and a second surface disposed opposite to each other along the thickness direction of the electrode assembly. The first surface is closer to the housing than the second surface. At least one of the outer first electrode plates is a single-side-coated first electrode plate. The first surface of the single-side-coated first electrode plate is not coated with the first active material layer. The second surface of the single-side-coated first electrode plate is coated with the first active material layer. The first active material layer applied to the second surface of the single-side-coated first electrode plate is a first material layer. Both the first surface and the second surface of the inner first electrode plate are coated with the first active material layer. The first active material layer applied to the first surface and the second surface of the inner first electrode plate is a second material layer. A conductivity of the single-side-coated first electrode plate is a S/cm, and a conductivity of the inner first electrode plate is b S/cm, satisfying a $\leq$ b.

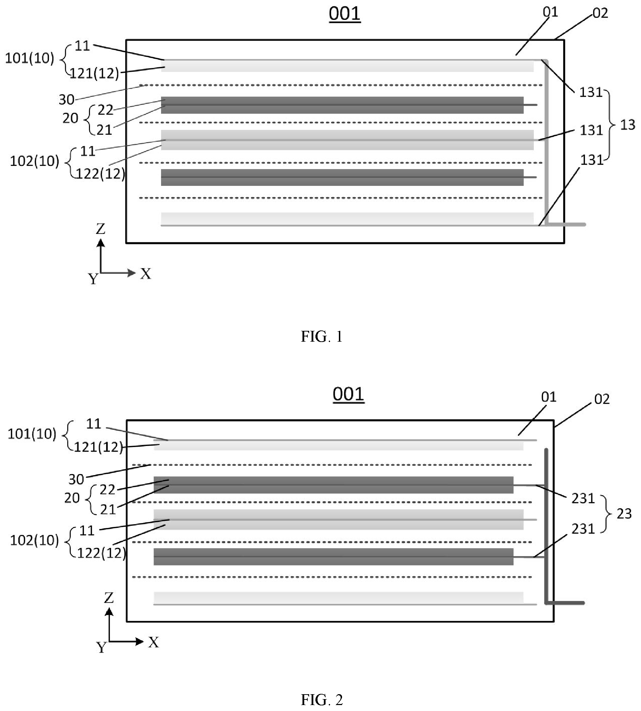

In this application, it is defined that in a stacked-type electrode assembly, the width direction of the electrode assembly is an X direction, the length direction of the electrode assembly is a Y direction, and the thickness direction of the electrode assembly is a Z direction. Understandably, the length direction, width direction, and thickness direction of the first electrode plate, the second electrode plate, and the separator are the same as those of the electrode assembly. As an example, as shown in FIG. 1 and FIG. 2, the secondary battery 001 includes a stacked-type electrode assembly 01 and a housing 02. Along the thickness direction Z of the electrode assembly 01, the electrode assembly 01 includes first electrode plates 10, second electrode plates 20, and separators 30 that are stacked up, with a separator being disposed between a first electrode plate 10 and a second electrode plate 20. The electrode assembly 01 further includes a first tab assembly 13 and a second tab assembly 23. The first tab assembly 13 includes a plurality of first tabs 131. The second tab assembly 23 includes a plurality of second tabs 231. The plurality of first tabs 131 correspond one-to-one to the first electrode plates 10. The plurality of second tabs 231 correspond one-to-one to the second electrode plates 20. The first electrode plates 10 include two outer first electrode plates 101 and one inner first electrode plate 102. Along the thickness direction Z of the electrode assembly 01, the two outer first electrode plates 101 are located on two outermost sides of the electrode assembly 01 respectively. The inner first electrode plate 102 is located between the two outer first electrode plates 101. The first electrode plate 10 includes a first current collector 11 and a first active material layer 12. The first current collector 11 includes a first surface (not shown in the figure) and a second surface (not shown in the figure) disposed opposite to each other along the thickness direction Z of the electrode assembly 01. The first surface is closer to the housing 02 than the second surface. The two outer first electrode plates 101 is a single-side-coated first electrode plate. The first surface of the single-side-coated first electrode plate is not coated with the first active material layer 12. The second surface of the single-side-coated first electrode plate is coated with the first active material layer 12. The first active material layer 12 applied to the second surface of the single-side-coated first electrode plate is a first material layer 121. Both the first surface and the second surface of the inner first electrode plate 102 are coated with the first active material layer 12. The first active material layer 12 applied to the first surface and the second surface of the inner first electrode plate 102 is a second material layer 122.

Through research, the applicant hereof finds that by applying different first active material layers to the single-side-coated outer first electrode plate and the inner first electrode plate of the electrode assembly and making the conductivity of the single-side-coated outer first electrode plate of the electrode assembly greater than or equal to that of the inner first electrode plate, that is, by satisfying A $\leq$ B, this application reduces the current density of the outer electrode plate of the electrode assembly, slows down the electrolyte consumption speed in the outer electrode plate of the electrode assembly during cycling, reduces the risk of black spots and lithium plating on the outer electrode plate of the electrode assembly, and improves the cycle performance of the secondary battery. When the current density of the outermost layer of the electrode assembly is greater than that of the inner layer (that is, A > B), the electrolyte consumption speed in the outer electrode plate of the electrode assembly is excessively fast, and black spots or lithium plating are prone to occur in the outer electrode plate of the electrode assembly, thereby reducing the cycle performance and safety performance of the secondary battery. Therefore, by disposing different first active material layers on the single-side-coated outer first electrode plate and the inner first electrode plate of the electrode assembly and making the conductivity of the single-side-coated outer first electrode plate less than or equal to that of the inner first electrode plate, this application reduces the current density of the outer electrode plate of the electrode assembly, slows down the electrolyte consumption speed during cycling, reduces the risk of black spots and lithium plating on the outer electrode plate of the electrode assembly during cycling, and improves the cycle performance of the secondary battery.

It is noted that the first active material layer of this application may be disposed on the entire region of the surfaces of the first current collector or a partial region of the surfaces of the first current collector, without being particularly limited herein, as long as the objectives of the application can be achieved.

In an embodiment of this application, $0.3 \leq a/b \leq 1$. For example, the value of a/b may be 0.3, 0.4, 0.5, 0.6, 0.7, 0.8, 0.9, 1 or a value falling within a range formed by any two thereof. By controlling the value of a/b to fall within the above range, this application makes the current density of the outer electrode plate of the electrode assembly greater than or equal to the current density of the inner electrode plate, thereby slowing down the electrolyte consumption speed during cycling. This reduces the risk of black spots and lithium plating on the outer electrode plate of the electrode assembly during cycling, thereby improving the cycle performance of the secondary battery.

In an embodiment of this application, $0.65 \leq a/b \leq 1$. For example, the value of A/B may be 0.65, 0.68, 0.7, 0.72, 0.75, 0.78, 0.8, 0.82, 0.85, 0.88, 0.9, 0.92, 0.95, 0.98, 1, or a value falling within a range formed by any two thereof. By controlling the value of a/b to fall within the above range, this application makes the current density of the outer electrode plate of the electrode assembly greater than or equal to the current density of the inner electrode plate, thereby slowing down the electrolyte consumption speed during cycling. This reduces the risk of black spots and lithium plating on the outer electrode plate of the electrode assembly during cycling, thereby improving the cycle performance of the secondary battery.

In an embodiment of this application, the first electrode plate is a positive electrode plate, When the positive electrode plate is used as the first electrode plate, the outer first electrode plate of the electrode assembly is a positive electrode plate, thereby further slowing down the electrolyte consumption speed on the outer side of the electrode assembly during cycling, and more effectively reducing the risk of black spots and lithium plating on the outer electrode plate of the electrode assembly during cycling, and further improving the cycle performance of the secondary battery.

In an embodiment of this application, the first material layer includes a first binder. A mass percent of the first binder is c based on a mass of the first material layer. The second material layer includes a second binder. A mass percent of the second binder is d based on a mass of the second material layer, satisfying $0.6 \leq c/d \leq 4$. For example, the value of c/d may be 0.6, 0.8, 1, 1.2, 1.5, 1.8, 2, 2.2, 2.5, 2.8, 3, 3.2, 3.5, 3.8, 4, or a value falling within a range formed by any two thereof. By controlling the value of c/d to fall within the above range, this application increases the impedance of the outer electrode plate of the electrode assembly in contrast to the outer electrode plate of a conventional electrode assembly. The first binder is used in conjunction with the second binder at appropriate mass fractions, thereby reducing polarization during transformation of the active material while reducing the current density of the outer electrode plate of the electrode assembly and slowing down the electrolyte consumption speed on the outer side of the electrode assembly during cycling. This reduces the risk of black spots and lithium plating on the outer electrode plate of the electrode assembly during cycling, thereby improving the cycle performance of the secondary battery.

In an embodiment of this application, $2\% \leq c \leq 5\%$. For example, the value of c may be 2%, 2.2%, 2.5%, 2.8%, 3%, 3.2%, 3.5%, 3.8%, 4%, 4.2%, 4.5%, 4.8%, 5%, or a value falling within a range formed by any two thereof. The first binder and the second binder each are at least one independently selected from polyvinylidene difluoride, polyvinylidene chloride, polyvinylidene dichloride, aramid, polyamide, polyacrylonitrile, an acrylate polymer, styrene-butadiene rubber, a polyacrylate salt, sodium carboxymethyl cellulose, polyvinylpyrrolidone, polyvinyl ether, pure acrylic emulsion, or polyacrylic acid. By using the first binder and the second binder falling within the above type ranges and controlling the mass percent of the first binder to fall within the above range, this application increases the impedance of the outer electrode plate of the electrode assembly, reduces the conductivity of the outer electrode plate of the electrode assembly, consequently reduces the current density of the outer electrode plate of the electrode assembly, and slows down the electrolyte consumption speed on the outer side of the electrode assembly during cycling, thereby reducing the risk of black spots and lithium plating on the outer electrode plate of the electrode assembly during cycling, and improving the cycle performance of the secondary battery.

In an embodiment of this application, the first material layer includes a first conductive agent. The second material layer includes a second conductive agent. The first conductive agent and the second conductive agent each are at least one independently selected from conductive carbon black, carbon nanotubes, graphene, or conductive graphite. Based on the mass of the first material layer, the mass percent $W_1$ of the first conductive agent is 0.5% to 5%. For example, the mass percent $W_1$ of the first conductive agent may be 0.5%, 0.8%, 1%, 1.2%, 1.5%, 1.8%, 2%, 2.2%, 2.5%, 2.8%, 3%, 3.2%, 3.5%, 3.8%, 4%, 4.2%, 4.5%, 4.8%, 5%, or a value falling within a range formed by any two thereof. Based on the mass of the second material layer, the mass percent $W_2$ of the second conductive agent is 1% to 10%. For example, the mass percent $W_2$ of the second conductive agent may be 1%, 1.5%, 2%, 2.5%, 3%, 3.5%, 4%, 4.5%, 5%, 5.5%, 6%, 6.5%, 7%, 7.5%, 8%, 8.5%, 9%, 9.5%, 10%, or a value falling within a range formed by any two thereof. By using the first conductive agent and the second conductive agent falling within the above type ranges, controlling the mass percent of the first conductive agent and the mass percent of the second conductive agent to fall within the above ranges, and using the first conductive agent in conjunction with the second conductive agent, this application increases the impedance of the outer electrode plate of the electrode assembly, reduces the conductivity of the outer electrode plate of the electrode assembly, consequently reduces the current density of the outer electrode plate of the electrode assembly, and slows down the electrolyte consumption speed on the outer side of the electrode assembly during cycling, thereby reducing the risk of black spots and lithium plating on the outer electrode plate of the electrode assembly during cycling, and improving the cycle performance of the secondary battery.

In an embodiment of this application, the first material layer includes a first active material. The second material layer includes a second active material. The first active material and the second active material each are at least one independently selected from lithium cobalt oxide, lithium iron phosphate, lithium nickel oxide, lithium manganese oxide, a nickel cobalt manganese ternary material, or a lithium-rich manganese-based material. Based on the mass of the first material layer, the mass percent $W'_1$ of the first active material is 90% to 97.5%. For example, the mass percent $W'_1$ of the first active material may be 90%, 90.5%, 91%, 91.5%, 92%, 92.5%, 93%, 93.5%, 94%, 94.5%, 95%, 95.5%, 96%, 96.5%, 97%, 97.5%, or a value falling within a range formed by any two thereof. Based on the mass of the second material layer, the mass percent $W'_2$ of the second active material is 87% to 98.5%. For example, the mass percent $W'_2$ of the second active material may be 87%, 87.5%, 88%, 88.5%, 89%, 89.5%, 90%, 90.5%, 91%, 91.5%, 92%, 92.5%, 93%, 93.5%, 94%, 94.5%, 95%, 95.5%, 96%, 96.5%, 97%, 97.5%, 98%, 98.5%, or a value falling within a range formed by any two thereof. By using the first active material and the second active material falling within the above type ranges, controlling the mass percent of the first active material and the mass percent of the second active material to fall within the above ranges, and using the first active material in conjunction with the second active material, this application increases the impedance of the outer electrode plate of the electrode assembly, consequently reduces the current density of the outer electrode plate of the electrode assembly, and slows down the electrolyte consumption speed on the outer side of the electrode assembly during cycling, thereby reducing the risk of black spots and lithium plating on the outer electrode plate of the electrode assembly during cycling, and improving the cycle performance of the secondary battery. In this application, the nickel cobalt manganese ternary material includes, but is not limited to, at least one of $LiNi_{0.90}Co_{0.05}Mn_{0.05}O_2$ (NCM955), NCM811, NCM622, NCM523, or NCM111. The lithium-rich manganese-based material is a $Li_2MnO_3$-based composite positive electrode material $Li_2MnO_3 \cdot LiMO_2$, where M is Ni, Co, or Mn; or a binary or ternary layered material of Ni, Co, or Mn.

In an embodiment of this application, $0.01 \leq b \leq 0.8$. For example, the value of b may be 0.01, 0.012, 0.015, 0.018, 0.02, 0.05, 0.08, 0.1, 0.2, 0.3, 0.4, 0.5, 0.6, 0.7, 0.8, or a value falling within a range formed by any two thereof. By controlling the conductivity of the inner first electrode plate to fall within the above range, this application achieves a relatively low current density of the outer electrode plate of the electrode assembly during cycling, thereby improving the cycle performance of the secondary battery.

In an embodiment of this application, a thickness of the first current collector of the single-side-coated first electrode plate is $T_1$ μm, and a thickness of the first current collector of the inner first electrode plate is $T_2$ μm, satisfying $T_1 \geq T_2$. In an embodiment of this application, the first electrode plate is a positive electrode plate, $12 \leq T_1 \leq 25$, and $6 \leq T_2 \leq 16$. For example, the value of $T_1$ may be 12, 13, 14, 15, 16, 17, 18, 19, 20, 21, 22, 23, 24, 25, or a value falling within a range formed by any two thereof; and the value of $T_2$ may be 6, 7, 8, 9, 10, 11, 12, 13, 14, 15, 16, or a value falling within a range formed by any two thereof. In an embodiment of this application, the first electrode plate is a negative electrode plate, $14 \leq T_1 \leq 25$, and $4 \leq T_2 \leq 16$. For example, the value of $T_1$ may be 14, 15, 16, 17, 18, 19, 20, 21, 22, 23, 24, 25, or a value falling within a range formed by any two thereof; and the value of $T_2$ may be 4, 5, 6, 7, 8, 9, 10, 11, 12, 13, 14, 15, 16, or a value falling within a range formed by any two thereof. This configuration helps alleviate the problem of warping caused by uneven stress on the first current collector of the single-side-coated first electrode plate due to the material layer applied to only one surface of the current collector. By disposing two material layers on the single-side-coated outer first electrode plate of the electrode assembly and causing the conductivity of the single-side-coated first electrode plate to be less than or equal to the conductivity of the inner first electrode plate, this application more effectively reduces the risk of black spots and lithium plating on the outer electrode plate of the electrode assembly during cycling, and achieves good cycle performance of the secondary battery.

In an embodiment of this application, the housing is an aluminum laminated film. Using the aluminum laminated film as the housing and letting the first electrode plate on the outer side of the electrode assembly be a positive electrode plate help reduce the risk of short-circuiting of the secondary battery and improve the cycle performance and safety performance of the secondary battery.

In an embodiment of this application, the secondary battery further includes an electrolyte solution. The electrolyte solution includes a lithium salt. The lithium salt includes at least one of lithium tetrafluorophosphate, lithium tetrafluoroborate, lithium hexafluorophosphate, lithium bis(oxalato)borate, lithium bis(fluorosulfonyl)imide, or lithium difluorophosphate. The concentration ω of the lithium salt is 1 mol/L to 5 mol/L. For example, the concentration ω of the lithium salt may be 1 mol/L, 1.2 mol/L, 1.5 mol/L, 1.8 mol/L, 2 mol/L, 2.2 mol/L, 2.5 mol/L, 2.8 mol/L, 3 mol/L, 3.2 mol/L, 3.5 mol/L, 3.8 mol/L, 4 mol/L, 4.2 mol/L, 4.5 mol/L, 4.8 mol/L, 5 mol/L, or a value falling within a range formed by any two thereof. Using the lithium salt falling within the above type range and controlling the concentration of the lithium salt to fall within the above range facilitate ion transport in the electrolyte solution. When used in conjunction with the binder in the first active material layer, the above lithium salt at the above concentration helps form a stable interface, yields good interface consistency, reduces the conductivity of the outer electrode plate of the electrode assembly, consequently reduces the current density of the outer electrode plate of the electrode assembly, and slows down the electrolyte consumption speed on the outer side of the electrode assembly during cycling, thereby reducing the risk of black spots and lithium plating on the outer electrode plate of the electrode assembly during cycling, and improving the cycle performance of the secondary battery.

In this application, when the first electrode plate or the second electrode plate is a positive electrode plate, the positive current collector is not particularly limited herein, as long as the objectives of this application can be achieved. For example, the positive current collector may include aluminum foil, aluminum alloy foil, a composite current collector (such as an aluminum carbon composite current collector), or the like.

In an embodiment of this application, the first electrode plate is a negative electrode plate, $0.5 \leq a/b \leq 1$, and $0.1 \leq b \leq 10$. For example, the value of a/b may be 0.5, 0.6, 0.7, 0.8, 0.9, 1, or a value falling within a range formed by any two thereof; and the value of b may be 0.1, 0.3, 0.5, 0.8, 1, 2, 3, 4, 5, 6, 7, 8, 9, 10, or a value falling within a range formed by any two thereof. When the first electrode plate is a negative electrode plate, different first active material layers are applied to the single-side-coated outer first electrode plate and the inner first electrode plate of the electrode assembly and the value of a/b and the value of b are controlled to fall within the above ranges. In contrast to the outer electrode plate of a conventional electrode assembly, this configuration increases the impedance of the outer electrode plate of the electrode assembly, thereby reducing the current density of the outer electrode plate of the electrode assembly, and slowing down the electrolyte consumption speed on the outer side of the electrode assembly during cycling. This reduces the risk of black spots and lithium plating on the outer electrode plate of the electrode assembly during cycling, thereby improving the cycle performance of the secondary battery.

In an embodiment of this application, the housing is a steel shell. Using the steel shell as the housing and letting the first electrode plate on the outer side of the electrode assembly be a negative electrode plate help reduce the risk of short-circuiting of the secondary battery and improve the cycle performance and safety performance of the secondary battery.

In an embodiment of this application, the first electrode plate is a negative electrode plate. The first binder and the second binder each are at least one independently selected from polyvinylidene difluoride, polyvinylidene chloride, polyvinylidene dichloride, aramid, polyamide, polyacrylonitrile, an acrylate polymer, styrene-butadiene rubber, a polyacrylate salt, sodium carboxymethyl cellulose, polyvinylpyrrolidone, polyvinyl ether, pure acrylic emulsion, or polyacrylic acid. Based on the mass of the first material layer, the mass percent of the first binder is 0.5% to 5%. Based on the mass of the second material layer, the mass percent of the second binder is 0.5% to 5%. When the first electrode plate is a negative electrode plate, by using the first binder and the second binder falling within the above type ranges, controlling the mass percent of the first binder and the mass percent of the second binder to fall within the above ranges, and using the first binder in conjunction with the second binder, this application increases the impedance of the outer electrode plate of the electrode assembly, consequently reduces the current density of the outer electrode plate of the electrode assembly, and slows down the electrolyte consumption speed on the outer side of the electrode assembly during cycling, thereby reducing the risk of black spots and lithium plating on the outer electrode plate of the electrode assembly during cycling, and improving the cycle performance of the secondary battery.

In an embodiment of this application, the first electrode plate is a negative electrode plate. The first conductive agent and the second conductive agent each are at least one independently selected from conductive carbon black, conductive graphite, carbon fiber (VGCF), carbon nanotubes (CNTs), or graphene. Based on the mass of the first material layer, the mass percent of the first conductive agent is 0.5% to 10%. Based on the mass of the second material layer, the mass percent of the second conductive agent is 0.5% to 10%. When the first electrode plate is a negative electrode plate, by using the first conductive agent and the second conductive agent falling within the above type ranges, controlling the mass percent of the first conductive agent and the mass percent of the second conductive agent to fall within the above ranges, and using the first conductive agent in conjunction with the second conductive agent, this application increases the impedance of the outer electrode plate of the electrode assembly, consequently reduces the current density of the outer electrode plate of the electrode assembly, and slows down the electrolyte consumption speed on the outer side of the electrode assembly during cycling, thereby reducing the risk of black spots and lithium plating on the outer electrode plate of the electrode assembly during cycling, and improving the cycle performance of the secondary battery.

In an embodiment of this application, the first electrode plate is a negative electrode plate. The first active material and the second active material each are at least one independently selected from natural graphite, artificial graphite, soft carbon, hard carbon, activated carbon, lithium alloy, lithium-titanium alloy, lithium-silicon dioxide, lithium-phosphorus oxide, lithium-sulfide, a silicon-based material, a titanate material, or a boron nitride material. Based on the mass of the first material layer, the mass percent of the first active material is 90% to 99%. Based on the mass of the second material layer, the mass percent of the second active material is 90% to 99%. When the first electrode plate is a negative electrode plate, by using the first active material and the second active material falling within the above type ranges, controlling the mass percent of the first active material and the mass percent of the second active material to fall within the above ranges, and using the first active material in conjunction with the second active material, this application increases the impedance of the outer electrode plate of the electrode assembly, consequently reduces the current density of the outer electrode plate of the electrode assembly, and slows down the electrolyte consumption speed on the outer side of the electrode assembly during cycling, thereby reducing the risk of black spots and lithium plating on the outer electrode plate of the electrode assembly during cycling, and improving the cycle performance of the secondary battery.

In this application, when the first electrode plate or the second electrode plate is a negative electrode plate, the negative current collector is not particularly limited herein, as long as the objectives of this application can be achieved. For example, the negative current collector may be copper foil, copper alloy foil, nickel foil, stainless steel foil, titanium foil, foamed nickel, foamed copper, a composite current collector (such as a lithium-copper composite current collector, a carbon-copper composite current collector, a nickel-copper composite current collector, or a titanium-copper composite current collector), or the like.

The method for preparing the outer first electrode plate is not particularly limited herein, as long as the objectives of this application can be achieved. For example, a method for preparing the outer first electrode plate includes, but is not limited to, the following steps: (1) mixing the first active material, the first binder, and the first conductive agent at a specified mass ratio, and then adding a solvent to formulate a first material layer slurry; (2) applying the first material layer slurry to one surface of the first current collector, and oven-drying the slurry to obtain a single-side-coated outer first electrode plate coated with the first material layer; (3) repeating the above steps on the other surface of the first current collector to obtain a double-side-coated outer first electrode plate coated with the first material layer; and (4) performing cold-pressing and cutting, and welding the first tab to obtain the outer first electrode plate.

In this application, the conductivity of the outer first electrode plate may be controlled by adjusting the mass percent of the first binder, the mass percent of the first conductive agent, and the mass percent of the first active material. For example, when other conditions are constant, if the mass percent of the first active material remains unchanged, an increase in the mass percent of the first binder leads to a decrease in the mass percent of the first conductive agent and a decrease in the conductivity of the outer first electrode plate. Conversely, a decrease in the mass percent of the first binder leads to an increase in the mass percent of the first conductive agent and an increase in the conductivity of the outer first electrode plate. In this application, the mass percent of the first active material, the mass percent of the first binder, and the mass percent of the first conductive agent may be controlled by adjusting the mass ratio of the first active material, the first binder, and the first conductive agent. In this application, the conductivity of the outer first electrode plate is also related to the overall thickness of the outer first electrode plate and the coating weight of the corresponding material layer. For example, for the outer first electrode plates of the same specifications, when other conditions are the same, a smaller thickness of the outer first electrode plate and a smaller coating weight result in a higher conductivity of the outer first electrode plate. The solvent and the solid content in the first material layer slurry in step (1) are not particularly limited herein, as long as the objectives of this application can be achieved. The oven-drying temperature and time in step (2) above are not particularly limited herein, and may be selected by a person skilled in the art as actually required, as long as the objectives of this application can be achieved. The process parameters for the cold-pressing and cutting and for the welding of the first tab in step (4) above are not particularly limited herein, and may be selected by a person skilled in the art as actually required, as long as the objectives of this application can be achieved. The dimensions of the first material layer are not particularly limited herein, as long as the objectives of this application can be achieved.

The method for preparing the inner first electrode plate is not particularly limited herein, as long as the objectives of this application can be achieved. For example, a method for preparing the inner first electrode plate includes, but is not limited to, the following steps: (1) mixing the second active material, the second binder, and the second conductive agent at a specified mass ratio, and then adding a solvent to formulate a second material layer slurry; (2) applying the second material layer slurry to one surface of the first current collector, and oven-drying the slurry to obtain a single-side-coated inner first electrode plate coated with the second material layer; (3) repeating the above steps on the other surface of the first current collector to obtain a double-side-coated inner first electrode plate coated with the second material layer; and (4) performing cold-pressing and cutting, and welding the first tab to obtain the inner first electrode plate.

In this application, the conductivity of the inner first electrode plate may be controlled by adjusting the mass percent of the second binder, the mass percent of the second conductive agent, and the mass percent of the second active material. For example, when other conditions are constant, if the mass percent of the second active material remains unchanged, an increase in the mass percent of the second binder leads to a decrease in the mass percent of the second conductive agent and a decrease in the conductivity of the inner first electrode plate. Conversely, a decrease in the mass percent of the second binder leads to an increase in the mass percent of the second conductive agent and an increase in the conductivity of the inner first electrode plate. In this application, the mass percent of the second active material, the mass percent of the second binder, and the mass percent of the second conductive agent may be controlled by adjusting the mass ratio of the second active material, the second binder, and the second conductive agent. In this application, the conductivity of the inner first electrode plate is also related to the overall thickness of the inner first electrode plate and the coating weight of the corresponding material layer. For example, for the inner first electrode plates of the same specifications, when other conditions are the same, a smaller thickness of the inner first electrode plate and a smaller coating weight result in a higher conductivity of the inner first electrode plate. The solvent and the solid content in the second material layer slurry in step (1) are not particularly limited herein, as long as the objectives of this application can be achieved. The oven-drying temperature and time in step (2) above are not particularly limited herein, and may be selected by a person skilled in the art as actually required, as long as the objectives of this application can be achieved. The process parameters for the cold-pressing and cutting and for the welding of the first tab in step (4) above are not particularly limited herein, and may be selected by a person skilled in the art as actually required, as long as the objectives of this application can be achieved. The dimensions of the second material layer are not particularly limited herein, as long as the objectives of this application can be achieved.

In an embodiment of this application, the electrolyte solution further includes an organic solvent. The organic solvent includes at least one of ethylene carbonate (EC), diethyl carbonate (DEC), dimethyl carbonate (DMC), ethyl methyl carbonate (EMC), propylene carbonate (PC), ethyl propylene (EA), or methyl propionate (MA). Using the organic solvent falling within the above type range in conjunction with the lithium salt helps reduce the conductivity of the outer electrode plate of the electrode assembly, consequently reduces the current density of the outer electrode plate of the electrode assembly, and slows down the electrolyte consumption speed on the outer side of the electrode assembly during cycling, thereby reducing the risk of black spots and lithium plating on the outer electrode plate of the electrode assembly during cycling, and improving the cycle performance of the secondary battery.

The electrolyte solution of this application further includes other solvents. The other solvents are not particularly limited herein, as long as the objectives of this application can be achieved. For example, the other solvents include, but are not limited to, at least one of a carbonate ester compound, a carboxylate ester compound, an ether compound, or other organic solvents. The carbonate ester compound may include, but is not limited to, at least one of a chain carbonate ester compound, a cyclic carbonate ester compound, or a fluorocarbonate ester compound. The chain carbonate ester compound may include, but is not limited to, dipropyl carbonate, methyl propyl carbonate, or ethylene propyl carbonate. The cyclic carbonate compound may include, but is not limited to, at least one of butylene carbonate or vinyl ethylene carbonate. The fluorocarbonate ester compound may include, but is not limited to, at least one of fluoroethylene carbonate, 1,2-difluoroethylene carbonate, 1,1-difluoroethylene carbonate, 1,1,2-trifluoroethylene carbonate, 1,1,2,2-tetrafluoroethylene carbonate, 1-fluoro-2-methyl ethylene, 1-fluoro-1-methyl ethylene carbonate, 1,2-difluoro-1-methyl ethylene carbonate, 1,1,2-trifluoro-2-methyl ethylene carbonate, or trifluoromethyl ethylene carbonate. The carboxylate ester compound may include, but is not limited to, at least one of methyl formate, methyl acetate, ethyl acetate, n-propyl acetate, tert-butyl acetate, propyl propionate, $\gamma$-butyrolactone, decanolactone, valerolactone, or caprolactone. The ether compound may include, but is not limited to, at least one of dibutyl ether, tetraglyme, diglyme, 1,2-dimethoxyethane, 1,2-diethoxyethane, 1-ethoxy-1-methoxyethane, 2-methyltetrahydrofuran, or tetrahydrofuran. The above-mentioned other organic solvents may include, but are not limited to, at least one of dimethyl sulfoxide, 1,2-dioxolane, sulfolane, methyl sulfolane, 1,3-dimethyl-2-imidazolidinone, N-methyl-2-pyrrolidone, dimethylformamide, acetonitrile, trimethyl phosphate, triethyl phosphate, or trioctyl phosphate.

The separator is not particularly limited herein as long as the objectives of this application can be achieved. For example, the separator may be made of a material including, but not limited to, at least one of polyethylene (PE)-based, polypropylene (PP)-based polyolefin (PO) separator, polyester (such as polyethylene terephthalate (PET) film), cellulose, polyimide (PI), polyamide (PA), spandex, or aramid. The type of the separator may include a woven film, a nonwoven film, a microporous film, a composite film, a calendered film, or a spinning film. The separator of this application may assume a porous structure. The pore size of the porous structure of the separator is not particularly limited herein, as long as the objectives of this application can be achieved. For example, the pore size may be 0.01 $\mu$m to 1 $\mu$m. The thickness of the separator is not particularly limited herein, as long as the objectives of this application can be achieved. For example, the thickness of the separator may be 5 $\mu$m to 40 $\mu$m.

The secondary battery is not particularly limited in this application, and may be any device in which an electrochemical reaction occurs. In one or more embodiments, the secondary battery may be, but is not limited to, a lithium-ion secondary battery (lithium-ion battery), a lithium polymer secondary battery, a lithium-ion polymer secondary battery, or the like.

The process of preparing the secondary battery of this application is well known to a person skilled in the art, and is not particularly limited herein. For example, the preparation process of the secondary battery may include, but is not limited to, the following steps: stacking an outer first electrode plate, a separator, a second electrode plate, a separator, an inner first electrode plate, a separator, a second electrode plate, a separator, and an outer first electrode plate in sequence, and then fixing the four corners of the entire stacked structure with adhesive tape to obtain a stacked-type electrode assembly; placing the electrode assembly into a housing, injecting an electrolyte solution into the housing, and sealing the housing to obtain a secondary battery. In addition, an overcurrent protection element, a conductive plate, and the like as required may be placed into a housing, so as to prevent the rise of internal pressure, overcharge, and overdischarge of the secondary battery.

A second aspect of this application provides an electronic device. The electronic device includes the secondary battery disclosed in any one of the preceding embodiments. The secondary battery of this application exhibits good cycle performance. Therefore, the electronic device of this application possesses a relatively long lifespan.

The electronic device is not particularly limited herein, and may be any electronic device known in the prior art. For example, the electronic device may include, but is not limited to, a laptop computer, pen-inputting computer, mobile computer, e-book player, portable phone, portable fax machine, portable photocopier, portable printer, stereo headset, video recorder, liquid crystal display television set, handheld cleaner, portable CD player, mini CD-ROM, transceiver, electronic notepad, calculator, memory card, portable voice recorder, radio, backup power supply, motor, automobile, motorcycle, power-assisted bicycle, bicycle, lighting appliance, toy, game console, watch, electric tool, flashlight, camera, large household storage battery, or lithium-ion capacitor.

## Embodiments

The implementations of this application are described below in more detail with reference to some embodiments and comparative embodiments. Various tests and evaluations are performed by the following methods. In addition, unless otherwise specified, the word "parts" means parts by mass, and the symbol "%" means a percentage by mass.

## Test methods and devices

## Test of the conductivity of an electrode plate

Disassembling a lithium-ion battery that has been discharged at a current of 0.2C until the voltage reaches 3.0 V, taking out the outer first electrode plate of the electrode assembly, and then taking out the inner first electrode plate of the electrode assembly based on the arrangement manner of the electrode plates in the electrode assembly; soaking the electrode plates in dimethyl carbonate (DMC) for 20 minutes, and then rinsing the electrode plates using DMC and acetone successively. Subsequently, placing the outer first electrode plate and the inner first electrode plate into an oven, and drying the electrode plates in an oven at 80 °C for 12 hours to obtain treated specimens of the outer first electrode plate and the inner first electrode plate.

Testing the treated outer first electrode plate and inner first electrode plate separately using a resistivity meter (supplied by Initial Energy Science & Technology Co. Ltd.). Resetting the resistivity meter for resistance and pressure before use. Placing an electrode plate specimen under test between electrodes of the resistivity meter. Taking electrode plate test regions at 3 different positions with a cross-sectional area of 30 mm $\times$ 30 mm on the specimen, and measuring the resistance values of the 3 electrode plate test regions with a cross-sectional area of 30 mm $\times$ 30 mm. Averaging out the measured resistance values of the electrode plate test regions with a cross-sectional area of 30 mm $\times$ 30 mm to obtain a resistance value of the tested electrode plate. Calculating using the following formula:

$$\mathrm{R} = \rho \times l/\mathrm{s}; \quad \text{and} \quad \gamma = 1/\rho = l/\mathrm{Rs}$$

In the formula above, R is the measured resistance value; $\rho$ is the resistivity; 1 is the thickness of the measured electrode plate; s is the cross-sectional area; and $\gamma$ is the measured electrode plate conductivity.

In this way, a conductivity a of the outer first electrode plate and the conductivity b of the inner first electrode plate are obtained.

## Test of lithium salt concentration in an electrolyte solution

Discharging a lithium-ion battery at 0.2C until the voltage reaches 3 V, and then disassembling the lithium-ion battery and collecting an electrolyte solution. Centrifuging the resulting first electrode plate, second electrode plate, and separator to obtain a liquid, and then mixing the liquid with the electrolyte solution thoroughly to obtain a liquid specimen. Performing an ion chromatography (IC) test on the liquid specimen to obtain a lithium salt concentration in the electrolyte solution.

## Lithium plating test

Leaving a lithium-ion battery in each embodiment and comparative embodiment to stand in a 10 °C thermostat for 60 minutes, and then charging the lithium-ion battery at a constant current of 2C until the voltage reaches 4.5 V, and then charging the battery at a constant voltage of 4.5 V until the current tapers off to 0.05C. Leaving the battery to stand for 5 minutes, and then discharging the battery at a constant current of 0.5C until the voltage drops to 3.0 V, thereby completing one cycle. Repeating the above charge-and-discharge process for 100 cycles, and then charging the battery at a constant current of 2C until the voltage reaches 4.5 V, and then charging the battery at a constant voltage of 4.5 V until the current tapers off to 0.05C. Leaving the battery to stand for 5 minutes, and then disassembling the lithium-ion battery. Taking out the outer electrode plate of the electrode assembly, and observing the lithium plating status on the surface of the outer electrode plate. The region without lithium plating on the surface of the outer electrode plate is golden yellow, and the lithium plating region is grayish white.

The criteria for determining the degree of lithium plating in the lithium-ion battery are as follows: a lithium plating area 0% means no lithium plating, indicating that the degree of lithium plating is none; a lithium plating area greater than 0 and less than or equal to 2% means slight lithium plating, indicating that the degree of lithium plating is slight; a lithium plating area greater than 2% and less than or equal to 20% means moderate lithium plating, indicating that the degree of lithium plating is moderate; a lithium plating area greater than 20% and less than or equal to 100% means severe lithium plating, indicating that the degree of lithium plating is severe. The percentage of the lithium plating area is calculated based on the total area of the first active material layer of the outer first electrode plate.

### Black spot test

Placing a lithium-ion battery into a 0 °C thermostat, and leaving the battery to stand for 60 minutes so that the temperature of the lithium-ion battery is constant. Charging, after the lithium-ion battery reaches a constant temperature, the lithium-ion battery at a constant current of 1C at 0 °C until the voltage reaches a cutoff voltage of 4.5 V, and then charging the battery at a constant voltage of 4.5 V until the current tapers off to 0.025C. Leaving the battery to stand for 5 minutes, and then discharging the battery at a constant current of 1C until the voltage reaches 3.0 V, thereby completing a charge-and-discharge cycle. Repeating the above steps for 500 cycles, and then charging the lithium-ion battery at a constant current of 1C until the voltage reaches a cutoff voltage of 4.5 V, and then charging the battery at a constant voltage of 4.5 V until the current tapers off to 0.025C, so as to obtain a fully charged battery cycled for 500 cycles. Disassembling the lithium-ion battery in a drying room with a humidity less than 5%, and taking photos to record whether any black spots occur on the surface of the outer electrode plate.

The criteria for determining the degree of black spots in the lithium-ion battery are as follows: a black spot area 0% means no black spots; a black spot area less than or equal to 2% means mild black spots; a black spot area ranging from 2% to 20% means moderate black spots; a black spot area greater than 20% means severe lithium plating. The percentage of the black spot area is calculated based on the total area of the first active material layer of the outer first electrode plate.

### Cycle performance test

Placing a lithium-ion battery into a 25 °C thermostat, and leaving the battery to stand for 30 minutes so that the temperature of the lithium-ion battery is constant 25 °C. Charging the battery at a constant current of 1C until the voltage reaches 4.5 V, and then charging the battery at a constant voltage of 4.5 V until the current tapers off to 0.025C. Leaving the battery to stand for 5 minutes, and then discharging the battery at a constant current of 0.2C until the voltage drops to 3.0 V, thereby completing a first cycle. Recording the discharge capacity at this time as an initial discharge capacity $C_0$. Charging and discharging the lithium-ion battery according to the above process until completion of 400 cycles (cls), and then stopping the test and recording the discharge capacity at the end of the 400th cycle as $C_1$. Calculating the 400th-cycle capacity retention rate as a cycle performance metric of the lithium-ion battery, and calculating the cycle capacity retention rate as:

$$400^{\text{th}}\text{-cycle capacity retention rate (\%)} = C_1/C_0 \times 100\%.$$

The higher the 400th-cycle capacity retention rate, the higher the cycle performance of the lithium-ion battery.

### Embodiment 1

### <Preparation of a first electrode plate>

Using the positive electrode plate as a first electrode plate. Mixing lithium cobalt oxide as a first active material, polyvinylidene difluoride as a first binder, conductive carbon black as a first conductive agent at a mass ratio of 96.5:3:0.5, adding N-methyl-pyrrolidone (NMP), and stirring well with a vacuum mixer to obtain a first material layer slurry in which the solid content is 70 wt%. Applying the first material layer slurry to one surface of 14 $\mu$m-thick positive current collector aluminum foil. Baking the foil at 120 °C for 1 hour to obtain a positive electrode plate coated with the first material layer on a single side, that is, a single-side-coated outer positive electrode plate. Performing cold-pressing and cutting and welding a positive tab to obtain an outer positive electrode plate of 50 mm × 90 mm in size. The coating weight of the first material layer is 16 mg/mm$^2$, and the thickness of the first material layer is 50 $\mu$m. Based on the mass of the first material layer, the mass percent c of the first binder is 3%, the mass percent $W_1$ of the first conductive agent is 0.5%, and the mass percent $W'_1$ of the first active material is 96.5%.

Mixing lithium cobalt oxide as a second active material, polyvinylidene difluoride as a second binder, conductive carbon black as a second conductive agent at a mass ratio of 97.5:1.5:1, adding N-methyl-pyrrolidone (NMP), and stirring well with a vacuum mixer to obtain a second material layer slurry in which the solid content is 70 wt%. Applying the second material layer slurry to one surface of 14 $\mu$m-thick positive current collector aluminum foil, and drying the foil at 120 °C for 1 hour to obtain a positive electrode plate coated with the second material layer on a single side. Repeating the above steps on the other surface of the positive current collector aluminum foil to obtain a positive electrode plate coated with the second material layer on both sides. Subsequently, drying the positive electrode plate for 1 hour in an 120 °C vacuum environment, and performing cold-pressing and cutting, and welding a positive tab to obtain an inner positive electrode plate of 50 mm × 90 mm in size. The coating weight of the second material layer is 16 mg/mm$^2$, and the thickness of the second material layer on both sides is 100 $\mu$m. Based on the mass of the second material layer, the mass percent d of the second binder is 1.5%, the mass percent $W_2$ of the second conductive agent is 1%, and the mass percent $W'_2$ of the second active material is 97.5%.

### <Preparation of a second electrode plate>

Using the negative electrode plate as a second electrode plate. Mixing artificial graphite as a negative active material, conductive carbon black, and styrene-butadiene rubber as a negative electrode binder at a mass ratio of 94:2:4. Adding deionized water, and stirring well with a vacuum mixer to obtain a negative electrode slurry in which the solid content is 65 wt%. Applying the negative electrode slurry evenly to one surface of 12 $\mu$m-thick negative current collector copper foil, and drying the foil at 120 °C for 1 hour to obtain a negative electrode plate coated with a negative electrode material layer on a single side. Repeating the above steps on the other surface of the negative current collector copper foil to obtain a negative electrode plate coated with the negative electrode material layer on both sides. Subsequently, drying the negative electrode plate for 1 hour in an 120 °C vacuum environment, and performing cold-pressing and cutting, and welding a negative tab to obtain a negative electrode plate of 50 mm × 90 mm in size. The coating weight of the negative electrode material layer is 11 mg/mm$^2$, and the thickness of the negative electrode material layer on both sides is 110 $\mu$m.

### <Preparation of an electrolyte solution>

Mixing ethylene carbonate (EC), propylene carbonate (PC), and diethyl carbonate (DEC) at a mass ratio of 1:1:1 in a dry argon atmosphere glovebox to obtain an organic solvent. Dissolving lithium hexafluorophosphate (LiPF$_6$) as a lithium salt in the organic solvent, and stirring well to obtain an electrolyte solution, where the concentration $\omega$ of the lithium salt LiPF$_6$ is 3 mol/L.

### <Separator>

Using a 7 $\mu$m-thick polyethylene (PE) film as a separator.

### <Preparation of a lithium-ion battery>

Stacking the above-prepared outer positive electrode plate, separator, negative electrode plate, separator, inner positive electrode plate, separator, negative electrode plate, separator, and outer positive electrode plate in sequence, and then fixing the four corners of the entire stacked structure with adhesive tape to obtain a stacked-type electrode assembly. Placing the electrode assembly into an aluminum laminated film, and drying the electrode assembly in an 80 °C vacuum oven for 12 hours remove moisture. Injecting the above-prepared electrolyte solution. Performing steps such as vacuum sealing, standing, formation, degassing, and edge trimming to obtain a lithium-ion battery. A designed potential range of the lithium-ion battery is 3.0 V to 4.5 V.

### Embodiments 2 to 18

Identical to Embodiment 1 except that the relevant preparation parameters are adjusted according to Table 1. When the lithium salt concentration in the electrolyte solution changes, the concentration of the organic solvent changes accordingly, but the mass ratio of ethylene carbonate (EC), propylene carbonate (PC), and diethyl carbonate (DEC) remains unchanged.

**Embodiment 19**

Identical to Embodiment 1 except that the first electrode plate, the second electrode plate, and the lithium-ion battery are prepared according to the following steps and the relevant preparation parameters are adjusted according to Table 1.

**<Preparation of a first electrode plate>**

Using the negative electrode plate as a first electrode plate. Mixing artificial graphite as a first active material, styrene-butadiene rubber (SBR) as a first binder, and carbon nanotubes (CNTs) as a first conductive agent at a mass ratio of 96.5:3:0.5, adding deionized water, and stirring well with a vacuum mixer to obtain a first material layer slurry in which the solid content is 65 wt%. Applying the first material layer slurry to one surface of 12 $\mu$m-thick negative current collector copper foil. Baking the foil at 120 °C for 1 hour to obtain a negative electrode plate coated with the first material layer on a single side, that is, a single-side-coated outer negative electrode plate. Performing cold-pressing and cutting and welding a negative tab to obtain an outer negative electrode plate of 50 mm × 90 mm in size. The coating weight of the first material layer is 12 mg/mm$^2$, and the thickness of the first material layer is 60 $\mu$m. Based on the mass of the first material layer, the mass percent c of the first binder is 3%, the mass percent $W_1$ of the first conductive agent is 0.5%, and the mass percent $W'_1$ of the first active material is 96.5%.

Mixing artificial graphite as a second active material, styrene-butadiene rubber (SBR) as a second binder, and carbon nanotubes (CNTs) as a second conductive agent at a mass ratio of 96.5:1.5:2, adding deionized water, and stirring well with a vacuum mixer to obtain a second material layer slurry in which the solid content is 65 wt%. Applying the second material layer slurry to one surface of 12 $\mu$m-thick negative current collector copper foil, and drying the foil at 120 °C for 1 hour to obtain a negative electrode plate coated with the second material layer on a single side. Repeating the above steps on the other surface of the negative current collector copper foil to obtain a negative electrode plate coated with the second material layer on both sides. Subsequently, drying the negative electrode plate for 1 hour in an 120 °C vacuum environment, and performing cold-pressing and cutting, and welding a negative tab to obtain an inner negative electrode plate of 50 mm × 90 mm in size. The coating weight of the second material layer is 12 mg/mm$^2$, and the thickness of the second material layer on both sides is 120 $\mu$m. Based on the mass of the second material layer, the mass percent d of the second binder is 1.5%, the mass percent $W_2$ of the second conductive agent is 2%, and the mass percent $W'_2$ of the second active material is 96.5%.

**<Preparation of a second electrode plate>**

Using the positive electrode plate as a second electrode plate. Mixing lithium cobalt oxide as a positive active material, polyvinylidene difluoride as a binder, conductive carbon black as a conductive agent at a mass ratio of 92.5:1.5:6, adding N-methyl-pyrrolidone (NMP), and stirring well with a vacuum mixer to obtain a positive electrode slurry in which the solid content is 70 wt%. Applying the positive electrode slurry evenly to one surface of 14 $\mu$m-thick positive current collector aluminum foil, and drying the foil at 120 °C for 1 hour to obtain a positive electrode plate coated with a positive electrode material layer on a single side. Repeating the above steps on the other surface of the positive current collector aluminum foil to obtain a positive electrode plate coated with the positive electrode material layer on both sides. Subsequently, drying the positive electrode plate for 1 hour in an 120 °C vacuum environment, and performing cold-pressing and cutting, and welding a positive tab to obtain a positive electrode plate of 60 mm × 90 mm in size. The coating weight of the positive electrode material layer is 18 mg/mm$^2$, and the thickness of the positive electrode material layer on both sides is 108 $\mu$m.

**<Preparation of a lithium-ion battery>**

Stacking the above-prepared outer negative electrode plate, separator, positive electrode plate, separator, inner negative electrode plate, separator, positive electrode plate, separator, and outer negative electrode plate in sequence, and then fixing the four corners of the entire stacked structure with adhesive tape to obtain a stacked-type electrode assembly. Placing the electrode assembly into a steel shell, and drying the electrode assembly in an 80 °C vacuum oven for 12 hours remove moisture. Injecting the above-prepared electrolyte solution. Performing steps such as vacuum sealing, standing, formation, degassing, and edge trimming to obtain a lithium-ion battery. A designed potential range of the lithium-ion battery is 3.0 V to 4.5 V

**Embodiments 20 to 21**

Identical to Embodiment 19 except that the relevant preparation parameters are adjusted according to Table 1.

**Comparative Embodiments 1 to 3**

Identical to Embodiment 1 except that the relevant preparation parameters are adjusted according to Table 1.
The preparation parameters and performance parameters of each embodiment and comparative embodiment are shown in Table 1 and Table 2.

**Table 1 (To be continued)**

|  | c/d | c(%) | d (%) | Type of first binder | Type of second binder | Type of first conductive agent | $W_1$ (%) | Type of first active material |
|---|---|---|---|---|---|---|---|---|
| Embodiment 1 | 2 | 3.00 | 1.50 | Polyvinylidene difluoride | Polyvinylidene difluoride | Conductive carbon black | 0.50 | Lithium cobalt oxide |
| Embodiment 2 | 0.6 | 3.00 | 5.00 | Polyvinylidene difluoride | Polyvinylidene difluoride | Conductive carbon black | 0.50 | Lithium cobalt oxide |
| Embodiment 3 | 4 | 3.00 | 0.75 | Polyvinylidene difluoride | Polyvinylidene difluoride | Conductive carbon black | 1.00 | Lithium cobalt oxide |
| Embodiment 4 | 2 | 2.00 | 1.00 | Polyvinylidene difluoride | Polyvinylidene difluoride | Conductive carbon black | 1.50 | Lithium cobalt oxide |
| Embodiment 5 | 2 | 5.00 | 2.50 | Polyvinylidene difluoride | Polyvinylidene difluoride | Conductive carbon black | 2.00 | Lithium cobalt oxide |
| Embodiment 6 | 2 | 3.00 | 1.50 | Polyvinylidene difluoride | Polyvinylidene dichloride | Conductive carbon black | 3.00 | Lithium cobalt oxide |
| Embodiment 7 | 2 | 3.00 | 1.50 | Polyvinylidene difluoride | Polyvinylidene difluoride | Conductive carbon black | 3.00 | Lithium cobalt oxide |
| Embodiment 8 | 2 | 3.00 | 1.50 | Polyvinylidene difluoride | Polyvinylidene difluoride | Conductive carbon black | 3.00 | Lithium cobalt oxide |
| Embodiment 9 | 2 | 3.00 | 1.50 | Polyvinylidene dichloride | Polyacrylic acid | Carbon nanotube | 3.00 | Lithium iron phosphate |
| Embodiment 10 | 2 | 3.00 | 1.50 | Polyvinylidene dichloride | Polyacrylic acid | Carbon nanotube | 3.00 | Lithium iron phosphate |
| Embodiment 11 | 2 | 3.00 | 1.50 | Polyvinylidene dichloride | Polyacrylic acid | Carbon nanotube | 3.00 | Lithium iron phosphate |
| Embodiment 12 | 2 | 3.00 | 1.50 | Polyvinylidene dichloride | Polyacrylic acid | Carbon nanotube | 4.00 | Lithium iron phosphate |
| Embodiment 13 | 2 | 3.00 | 1.50 | Polyvinylidene dichloride | Polyacrylic acid | Carbon nanotube | 4.00 | Lithium iron phosphate |
| Embodiment 14 | 2 | 3.00 | 1.50 | Polyvinylidene dichloride | Polyacrylic acid | Carbon nanotube | 5.00 | Lithium iron phosphate |
| Embodiment 15 | 2 | 3.00 | 1.50 | Polyvinylidene difluoride | Polyvinylidene difluoride | Conductive carbon black | 5.00 | Lithium cobalt oxide |
| Embodiment 16 | 2 | 3.00 | 1.50 | Polyvinylidene difluoride | Polyvinylidene difluoride | Conductive carbon black | 5.00 | Lithium cobalt oxide |
| Embodiment 17 | 2 | 3.00 | 1.50 | Polyvinylidene difluoride | Polyvinylidene difluoride | Conductive carbon black | 5.00 | Lithium cobalt oxide |
| Embodiment 18 | 2 | 2.00 | 1.00 | Polyvinylidene difluoride | Polyvinylidene difluoride | Conductive carbon black | 5.00 | Lithium cobalt oxide |
| Embodiment 19 | 2 | 3.00 | 1.50 | Styrene-buta-diene rubber | Styrene-buta-diene rubber | Carbon na-notube | 0.50 | Artificial graphite |

(continued)

| | c/d | c(%) | d (%) | Type of first binder | Type of second binder | Type of first conductive agent | $W_1$ (%) | Type of first active material |
|---|---|---|---|---|---|---|---|---|
| Embodiment 20 | 2 | 3.00 | 1.50 | Styrene-butadiene rubber | Styrene-butadiene rubber | Carbon nanotube | 1.50 | Artificial graphite |
| Embodiment 21 | 2 | 3.00 | 1.50 | Styrene-butadiene rubber | Styrene-butadiene rubber | Carbon nanotube | 3.00 | Artificial graphite |
| Comparative Embodiment 1 | 0.5 | 1.50 | 3.00 | Polyvinylidene difluoride | Polyvinylidene difluoride | Conductive carbon black | 6.00 | Lithium cobalt oxide |
| Comparative Embodiment 2 | 1 | 3.00 | 3.00 | Polyvinylidene difluoride | Polyvinylidene dichloride | Conductive carbon black | 3 | Lithium cobalt oxide |
| Comparative Embodiment 3 | 2 | 3.00 | 1.50 | Polyvinylidene difluoride | Polyvinylidene dichloride | Conductive carbon black | 4 | Lithium cobalt oxide |

**Table 1 (Continued)**

| | $W'_1$ (%) | Type of second conductive agent | $W_2$ (%) | Type of second active material | $W'_2$ (%) | Type of lithium salt | $\omega$ (mol/L) |
|---|---|---|---|---|---|---|---|
| Embodiment 1 | 96.50 | Conductive carbon black | 1.00 | Lithium cobalt oxide | 97.50 | Lithium hexafluorophosphate | 3 |
| Embodiment 2 | 96.50 | Conductive carbon black | 2.00 | Lithium cobalt oxide | 93.00 | Lithium hexafluorophosphate | 3 |
| Embodiment 3 | 96.00 | Conductive carbon black | 3.00 | Lithium cobalt oxide | 96.25 | Lithium hexafluorophosphate | 3 |
| Embodiment 4 | 96.50 | Conductive carbon black | 4.00 | Lithium cobalt oxide | 95.00 | Lithium hexafluorophosphate | 3 |
| Embodiment 5 | 93.00 | Conductive carbon black | 5.00 | Lithium cobalt oxide | 92.50 | Lithium hexafluorophosphate | 3 |
| Embodiment 6 | 94.00 | Conductive carbon black | 6.00 | Lithium cobalt oxide | 92.50 | Lithium hexafluorophosphate | 3 |
| Embodiment 7 | 94.00 | Carbon nanotube | 6.00 | Lithium cobalt oxide | 92.50 | Lithium hexafluorophosphate | 3 |
| Embodiment 8 | 94.00 | Carbon nanotube | 6.00 | NCM811 | 92.50 | Lithium hexafluorophosphate | 3 |
| Embodiment 9 | 94.00 | Carbon nanotube | 6.00 | Lithium cobalt oxide | 92.50 | Lithium hexafluorophosphate | 3 |
| Embodiment 10 | 94.00 | Carbon nanotube | 6.00 | NCM811 | 92.50 | Lithium hexafluorophosphate | 3 |
| Embodiment 11 | 94.00 | Conductive carbon black | 6.00 | Lithium cobalt oxide | 92.50 | Lithium hexafluorophosphate | 3 |
| Embodiment 12 | 93.00 | Graphene | 2.00 | Lithium cobalt oxide | 96.50 | Lithium hexafluorophosphate | 3 |
| Embodiment 13 | 93.00 | Graphene | 2.50 | Lithium cobalt oxide | 96.00 | Lithium hexafluorophosphate | 3 |

(continued)

| | W'$_1$ (%) | Type of second conductive agent | W$_2$ (%) | Type of second active material | W'$_2$ (%) | Type of lithium salt | ω (mol/L) |
|---|---|---|---|---|---|---|---|
| Embodiment 14 | 92.00 | Graphene | 3.00 | Lithium cobalt oxide | 95.50 | Lithium hexafluorophosphate | 3 |
| Embodiment 15 | 92.00 | Conductive carbon black | 6.00 | Lithium cobalt oxide | 92.50 | Lithium hexafluorophosphate | 1 |
| Embodiment 16 | 92.00 | Conductive carbon black | 6.00 | Lithium cobalt oxide | 92.50 | Lithium hexafluorophosphate | 5 |
| Embodiment 17 | 92.00 | Conductive carbon black | 8.00 | Lithium cobalt oxide | 90.50 | Lithium bis(oxalato) borate | 3 |
| Embodiment 18 | 93.00 | Conductive carbon black | 10.00 | Lithium cobalt oxide | 89.00 | Lithium bis(fluorosulfonyl)imide | 3 |
| Embodiment 19 | 96.50 | Carbon nano-tube | 2.00 | Artificial gra-phite | 96.50 | Lithium hexafluoro-phosphate | 3 |
| Embodiment 20 | 95.50 | Carbon nano-tube | 4.00 | Artificial gra-phite | 94.50 | Lithium hexafluoro-phosphate | 3 |
| Embodiment 21 | 94.00 | Carbon nano-tube | 6.00 | Artificial gra-phite | 92.50 | Lithium hexafluoro-phosphate | 3 |
| Comparative Embodiment 1 | 92.50 | Conductive carbon black | 3.00 | Lithium cobalt oxide | 94.00 | Lithium hexafluorophosphate | 3 |
| Comparative Embodiment 2 | 94.00 | Carbon nanotube | 2.00 | Lithium iron phosphate | 95.00 | Lithium hexafluorophosphate | 3 |
| Comparative Embodiment 3 | 93.00 | Carbon nanotube | 2.00 | Lithium iron phosphate | 96.50 | Lithium hexafluorophosphate | 3 |

**Table 2**

| | a (S/cm) | b (S/cm) | a/b | Lithium plating area (%) | Black spot area (%) | 400th-cycle capacity retention rate (%) |
|---|---|---|---|---|---|---|
| Embodiment 1 | 0.053 | 0.108 | 0.491 | 0 | 0 | 88.5 |
| Embodiment 2 | 0.053 | 0.096 | 0.552 | 0 | 0 | 89.1 |
| Embodiment 3 | 0.066 | 0.158 | 0.418 | 0 | 0 | 87.2 |
| Embodiment 4 | 0.099 | 0.171 | 0.579 | 0 | 0 | 89.2 |
| Embodiment 5 | 0.096 | 0.185 | 0.519 | 0 | 0 | 88.8 |
| Embodiment 6 | 0.146 | 0.198 | 0.737 | 0 | 0 | 90.1 |
| Embodiment 7 | 0.146 | 0.216 | 0.676 | 0 | 0 | 89.6 |
| Embodiment 8 | 0.146 | 0.327 | 0.446 | 0 | 0 | 88.2 |
| Embodiment 9 | 0.115 | 0.196 | 0.587 | 0 | 0 | 89.4 |
| Embodiment 10 | 0.115 | 0.293 | 0.392 | 0 | 0 | 87.5 |
| Embodiment 11 | 0.115 | 0.197 | 0.584 | 0 | 0 | 88.9 |
| Embodiment 12 | 0.127 | 0.341 | 0.372 | 0 | 0 | 88.3 |
| Embodiment 13 | 0.127 | 0.361 | 0.352 | 0 | 0 | 88.5 |
| Embodiment 14 | 0.142 | 0.38 | 0.374 | 0 | 0 | 89.1 |
| Embodiment 15 | 0.171 | 0.191 | 0.895 | 0 | 0 | 87.4 |

(continued)

| | a (S/cm) | b (S/cm) | a/b | Lithium plating area (%) | Black spot area (%) | 400th-cycle capacity retention rate (%) |
|---|---|---|---|---|---|---|
| Embodiment 16 | 0.171 | 0.191 | 0.895 | 0 | 0 | 90.8 |
| Embodiment 17 | 0.171 | 0.208 | 0.822 | 0 | 0 | 91.3 |
| Embodiment 18 | 0.183 | 0.226 | 0.810 | 0 | 0 | 91.1 |
| Embodiment 19 | 1.56 | 2.24 | 0.696 | 0 | 0 | 85.8 |
| Embodiment 20 | 1.98 | 3.08 | 0.643 | 0 | 0 | 86.5 |
| Embodiment 21 | 2.63 | 3.87 | 0.680 | 0 | 0 | 86.5 |
| Comparative Embodiment 1 | 0.193 | 0.146 | 1.322 | 4 | 10 | 73.1 |
| Comparative Embodiment 2 | 0.146 | 0.085 | 1.718 | 7 | 15 | 70.5 |
| Comparative Embodiment 3 | 0.168 | 0.104 | 1.615 | 4 | 12 | 71.1 |

As can be seen from Embodiments 1 to 21 and Comparative Embodiments 1 to 3, by controlling the conductivity of the single-side-coated first electrode plate to be less than or equal to the conductivity of the inner first electrode plate, this application makes the black spot area and the lithium plating area on the outer electrode plate of the electrode assembly relatively small, and increases the 400th-cycle capacity retention rate of the lithium-ion battery. This indicates that the lithium-ion battery of this application is at lower risk of black spots and lithium plating on the outer electrode plate of the electrode assembly during cycling, and exhibits good cycle performance. The parameters of the first material layer and the second material layer in Comparative Embodiment 1 are exactly the opposite of the parameters of the first material layer and the second material layer in Embodiment 1. The conductivity of the single-side-coated first electrode plate in Comparative Embodiments 1 to 3 is higher than the conductivity of the inner first electrode plate; and in Comparative Embodiments 1 to 3, the black spot area of the lithium-ion battery is larger, the lithium plating area is larger, and the 400th-cycle capacity retention rate is lower. In Embodiments 1 to 21, the black spot area and the lithium plating area of the outer first electrode plate in the lithium-ion battery are relatively small, and the 400th-cycle capacity retention rate is relatively high, indicating relatively low risk of black spots and lithium plating on the outer electrode plate of the electrode assembly during cycling and good cycle performance of the lithium-ion battery.

The value of c/d typically affects the cycle performance of the lithium-ion battery. As can be seen from Embodiments 1 to 3, when the value of c/d is controlled to fall within the range specified herein, the black spot area and the lithium plating area of the outer first electrode plate in the lithium-ion battery are relatively small, and the 400th-cycle capacity retention rate is relatively high, indicating relatively low risk of black spots and lithium plating on the outer electrode plate of the electrode assembly during cycling and good cycle performance of the lithium-ion battery.

The type and content of the first binder and the type and content of the second binder typically affect the cycle performance of the lithium-ion battery. As can be seen from Embodiments 1 to 14, when the first binder and the second binder falling within the ranges specified herein are employed, and when the content of the first binder and the content of the second binder fall within the ranges specified herein, the black spot area and the lithium plating area of the outer first electrode plate in the lithium-ion battery are relatively small, and the 400th-cycle capacity retention rate is relatively high, indicating relatively low risk of black spots and lithium plating on the outer electrode plate of the electrode assembly during cycling and good cycle performance of the lithium-ion battery.

The type and content of the first conductive agent and the type and content of the second conductive agent typically affect the cycle performance of the lithium-ion battery. As can be seen from Embodiments 1 to 14, when the first conductive agent and the second conductive agent falling within the ranges specified herein are employed, and when the content of the first conductive agent and the content of the second conductive agent are controlled to fall within the ranges specified herein, the black spot area and the lithium plating area of the outer first electrode plate in the lithium-ion battery are relatively small, and the 400th-cycle capacity retention rate is relatively high, indicating relatively low risk of black spots and lithium plating on the outer electrode plate of the electrode assembly during cycling and good cycle performance of the lithium-ion battery.

The type and content of the first active material and the type and content of the second active material typically affect the cycle performance of the lithium-ion battery. As can be seen from Embodiments 1 to 14, when the first active material and the second active material falling within the ranges specified herein are employed, and when the content of the first active material and the content of the second active material are controlled to fall within the ranges specified herein, the black spot area and the lithium plating area of the outer first electrode plate in the lithium-ion battery are relatively small, and the 400th-cycle capacity retention rate is relatively high, indicating relatively low risk of black spots and lithium plating on the outer electrode plate of the electrode assembly during cycling and good cycle performance of the lithium-ion battery.

The conductivity b of the inner first electrode plate typically affects the cycle performance of the lithium-ion battery. As can be seen from Embodiments 1 to 18, when the value of b is controlled to fall within the range specified herein, the black spot area and the lithium plating area of the outer first electrode plate in the lithium-ion battery are relatively small, and the 400$^{th}$-cycle capacity retention rate is relatively high, indicating relatively low risk of black spots and lithium plating on the outer electrode plate of the electrode assembly during cycling and good cycle performance of the lithium-ion battery.

The type and concentration of the lithium salt typically affect the cycle performance of the lithium-ion battery. As can be seen from Embodiment 6 and Embodiments 15 to 18, when the lithium salt falling within the range specified herein is employed, and when the concentration of the lithium salt is controlled to fall within the range specified herein, the black spot area and the lithium plating area of the outer first electrode plate in the lithium-ion battery are relatively small, and the 400$^{th}$-cycle capacity retention rate is relatively high, indicating relatively low risk of black spots and lithium plating on the outer electrode plate of the electrode assembly during cycling and good cycle performance of the lithium-ion battery.

The type of the first electrode plate typically affects the cycle performance of the lithium-ion battery. As can be seen from Embodiments 1 and 19, when the first electrode plate is a positive electrode plate or a negative electrode plate, the black spot area and the lithium plating area of the outer first electrode plate in the lithium-ion battery are relatively small, and the 400$^{th}$-cycle capacity retention rate is relatively high, indicating relatively low risk of black spots and lithium plating on the outer electrode plate of the electrode assembly during cycling and good cycle performance of the lithium-ion battery.

When the first electrode plate is a negative electrode plate, the value of a/b and the value of b typically affect the cycle performance of the lithium-ion battery. As can be seen from Embodiments 19 to 21, when the value of a/b and the value of b are controlled to fall within the ranges specified herein, the black spot area and the lithium plating area of the outer first electrode plate in the lithium-ion battery are relatively small, and the 400$^{th}$-cycle capacity retention rate is relatively high, indicating relatively low risk of black spots and lithium plating on the outer electrode plate of the electrode assembly during cycling and good cycle performance of the lithium-ion battery.

It is noted that the relational terms herein such as "first" and "second" are used merely to differentiate one entity or operation from another, but do not involve or imply any actual relationship or sequence between the entities or operations. Moreover, the terms "include", "comprise", and any variation thereof are intended to cover a non-exclusive inclusion relationship by which a process, method, or object that includes or comprises a series of elements not only includes such elements, but also includes other elements not expressly specified or also includes inherent elements of the process, method, or object.

Different embodiments of this application are described in a correlative manner. For the same or similar part in one embodiment, reference may be made to another embodiment. Each embodiment focuses on differences from other embodiments.

The embodiments described above are merely preferred embodiments of this application, but are not intended to limit this application. Any and all modifications, equivalent replacements, improvements, and the like made without departing from the concept and principles of this application still fall within the protection scope of this application.

**Claims**

1. A secondary battery, comprising a housing and a stacked-type electrode assembly, wherein along a thickness direction of the electrode assembly, the electrode assembly comprises first electrode plates, second electrode plates , and separators that are stacked up, with a separator being disposed between a first electrode plate and a second electrode plate; the electrode assembly further comprises a first tab assembly and a second tab assembly; the first tab assembly comprises a plurality of first tabs ; the second tab assembly comprises a plurality of second tabs; the plurality of first tabs correspond one-to-one to the first electrode plates ; and the plurality of second tabs correspond one-to-one to the second electrode plates;

   the first electrode plates comprise two outer first electrode plates and at least one inner first electrode plate; along the thickness direction of the electrode assembly , the two outer first electrode plates are located on two outermost sides of the electrode assembly respectively; and the inner first electrode plate is located between the two outer first electrode plates;
   the first electrode plate comprises a first current collector and a first active material layer, the first current collector comprises a first surface and a second surface disposed opposite to each other along the thickness direction of the electrode assembly, and the first surface is closer to the housing than the second surface;
   at least one of the outer first electrode plates is a single-side-coated first electrode plate, the first surface of the single-side-coated first electrode plate is not coated with the first active material layer, the second surface of the single-side-coated first electrode plate is coated with the first active material layer, and the first active material layer applied to the second surface of the single-side-coated first electrode plate is a first material layer;

both the first surface and the second surface of the inner first electrode plate are coated with the first active material layer, and the first active material layer applied to the first surface and the second surface of the inner first electrode plate is a second material layer; and

a conductivity of the single-side-coated first electrode plate is a S/cm, and a conductivity of the inner first electrode plate is b S/cm, satisfying $a \leq b$.

2. The secondary battery according to claim 1, wherein $0.3 \leq a/b \leq 1$.

3. The secondary battery according to claim 2, wherein $0.65 \leq a/b \leq 1$.

4. The secondary battery according to any one of claims 1 to 3, wherein the first electrode plate is a positive electrode plate.

5. The secondary battery according to claim 4, wherein the first material layer comprises a first binder, a mass percent of the first binder is c based on a mass of the first material layer, the second material layer comprises a second binder, and a mass percent of the second binder is d based on a mass of the second material layer, satisfying $0.6 \leq c/d \leq 4$.

6. The secondary battery according to claim 5, wherein $2\% \leq c \leq 5\%$; and the first binder and the second binder each are at least one independently selected from polyvinylidene difluoride, polyvinylidene chloride, polyvinylidene dichloride, aramid, polyamide, polyacrylonitrile, an acrylate polymer, styrene-butadiene rubber, a polyacrylate salt, sodium carboxymethyl cellulose, polyvinylpyrrolidone, polyvinyl ether, pure acrylic emulsion, or polyacrylic acid.

7. The secondary battery according to claim 4, wherein the first material layer comprises a first conductive agent; the second material layer comprises a second conductive agent; the first conductive agent and the second conductive agent each are at least one independently selected from conductive carbon black, carbon nanotubes, graphene, or conductive graphite; based on a mass of the first material layer, a mass percent of the first conductive agent is 0.5% to 5%; and based on a mass of the second material layer, a mass percent of the second conductive agent is 1% to 10%.

8. The secondary battery according to claim 4, wherein the first material layer comprises a first active material; the second material layer comprises a second active material; the first active material and the second active material each are at least one independently selected from lithium cobalt oxide, lithium iron phosphate, lithium nickel oxide, lithium manganese oxide, a nickel cobalt manganese ternary material, or a lithium-rich manganese-based material; based on a mass of the first material layer, a mass percent of the first active material is 90% to 97.5%; and based on a mass of the second material layer, a mass percent of the second active material is 87% to 98.5%.

9. The secondary battery according to claim 4, wherein $0.01 \leq b \leq 0.8$.

10. The secondary battery according to claim 1 or 2, wherein a thickness of the first current collector of the single-side-coated first electrode plate is $T_1$ $\mu$m, and a thickness of the first current collector of the inner first electrode plate is $T_2$ $\mu$m, satisfying $T_1 \geq T_2$.

11. The secondary battery according to claim 10, wherein the first electrode plate is a positive electrode plate, $12 \leq T_1 \leq 25$, and $6 \leq T_2 \leq 16$

12. The secondary battery according to claim 10, wherein the first electrode plate is a negative electrode plate, $14 \leq T_1 \leq 25$, and $4 \leq T_2 \leq 16$.

13. The secondary battery according to claim 4, wherein the housing is an aluminum laminated film.

14. The secondary battery according to claim 5, wherein the secondary battery further comprises an electrolyte solution; the electrolyte solution comprises a lithium salt; the lithium salt comprises at least one of lithium tetrafluorophosphate, lithium tetrafluoroborate, lithium hexafluorophosphate, lithium bis(oxalato)borate, lithium bis(fluorosulfonyl)imide, or lithium difluorophosphate; and a concentration of the lithium salt is 1 mol/L to 5 mol/L

15. The secondary battery according to claim 1 or 2, wherein the first electrode plate is a negative electrode plate, $0.5 \leq a/b \leq 1$, and $0.1 \leq b \leq 10$.

**16.** The secondary battery according to claim 12, wherein the housing is a steel shell.

**17.** An electronic device, comprising the secondary battery according to any one of claims 1 to 16.

FIG. 1

FIG. 2

## INTERNATIONAL SEARCH REPORT

| International application No. |
|---|
| **PCT/CN2025/105719** |

**A. CLASSIFICATION OF SUBJECT MATTER**

H01M10/0525(2010.01)i; H01M10/0585(2010.01)i; H01M4/131(2010.01)i

According to International Patent Classification (IPC) or to both national classification and IPC

**B. FIELDS SEARCHED**

Minimum documentation searched (classification system followed by classification symbols)

IPC: H01M10/-; H01M4/-

Documentation searched other than minimum documentation to the extent that such documents are included in the fields searched

Electronic data base consulted during the international search (name of data base and, where practicable, search terms used)

CNTXT, WPABSC, ENTXT, VEN, CNKI: 二次电池, 正极, 负极, 极片, 电导率, 导电率, 电流密度, 电阻, 单面, 单侧, 一侧, 黑斑, 析锂, 循环, secondary battery, conductivity, current density, resistance, single-sided, black spot, lithium precipitation

**C. DOCUMENTS CONSIDERED TO BE RELEVANT**

| Category* | Citation of document, with indication, where appropriate, of the relevant passages | Relevant to claim No. |
|---|---|---|
| PX | CN 119170855 A (NINGDE AMPEREX TECHNOLOGY LTD.) 20 December 2024 (2024-12-20) claims 1-17 | 1-17 |
| PX | CN 119069773 A (NINGDE AMPEREX TECHNOLOGY LTD.) 03 December 2024 (2024-12-03) description, embodiment 2 | 1-17 |
| X | CN 117728043 A (NINGDE AMPEREX TECHNOLOGY LTD.) 19 March 2024 (2024-03-19) description, paragraph 71, and embodiment 1-1, and figure 2 | 1-11, 13-14, 16-17 |
| A | CN 117728043 A (NINGDE AMPEREX TECHNOLOGY LTD.) 19 March 2024 (2024-03-19) description, paragraph 71, and embodiment 1-1, and figure 2 | 12, 15 |
| A | CN 114695841 A (WUHU ETC BATTERY LIMITED) 01 July 2022 (2022-07-01) description, embodiment 1 | 1-17 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **03 September 2025** | **12 September 2025** |

| Name and mailing address of the ISA/CN | Authorized officer |
|---|---|
| **China National Intellectual Property Administration (ISA/CN) China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2025/105719** |

| C. | DOCUMENTS CONSIDERED TO BE RELEVANT | |
| --- | --- | --- |
| Category* | Citation of document, with indication, where appropriate, of the relevant passages | Relevant to claim No. |
| A | CN 111916845 A (DONGGUAN POWERAMP TECHNOLOGY LIMITED) 10 November 2020 (2020-11-10) description, embodiment 1 | 1-17 |
| A | WO 2024119474 A1 (NINGDE AMPEREX TECHNOLOGY LTD.) 13 June 2024 (2024-06-13) description, embodiment 1-1 | 1-17 |

Form PCT/ISA/210 (second sheet) (July 2022)

## INTERNATIONAL SEARCH REPORT
### Information on patent family members

International application No.

**PCT/CN2025/105719**

| Patent document cited in search report | | | Publication date (day/month/year) | Patent family member(s) | | | Publication date (day/month/year) |
|---|---|---|---|---|---|---|---|
| CN | 119170855 | A | 20 December 2024 | None | | | |
| CN | 119069773 | A | 03 December 2024 | None | | | |
| CN | 117728043 | A | 19 March 2024 | US | 2025219062 | A1 | 03 July 2025 |
| CN | 114695841 | A | 01 July 2022 | CN | 114695841 | B | 03 November 2023 |
| CN | 111916845 | A | 10 November 2020 | CN | 111916845 | B | 06 July 2021 |
| | | | | IN | 202114036093 | A | 03 September 2021 |
| | | | | IN | 524175 | B | 15 March 2024 |
| WO | 2024119474 | A1 | 13 June 2024 | CN | 117203800 | A | 08 December 2023 |
| | | | | IN | 202517064544 | A | 18 July 2025 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202411216709